# EUROPÄISCHE PATENTSCHRIFT

(11) **EP 0 932 771 B1**
(45) Veröffentlichungstag und Bekanntmachung des Hinweises auf die Patenterteilung: **07.08.2002**
(21) Anmeldenummer: 97912159.7
(22) Anmeldetag: 09.10.1997
(51) Int. Cl.: F16B 35/04

(54) **SCHRAUBE ZUR BEFESTIGUNG VON METALL- UND/ODER KUNSTSTOFFPROFILEN ODER -PLATTEN AUF EINEM UNTERBAU**
SCREW FOR FASTENING METAL OR PLASTIC SECTIONS OR PLATES ONTO A BASE
VIS POUR FIXER DES PROFILES OU DES PLAQUES METALLIQUES OU PLASTIQUES SUR UNE INFRASTRUCTURE

(30) Priorität: 25.10.1996 DE 19644507
(43) Veröffentlichungstag der Anmeldung: 04.08.1999
(73) Patentinhaber: SFS intec Holding AG, 9435 Heerbrugg (CH)
(72) Erfinder: PALM, Erich, CH-9434 Au (CH)
(74) Vertreter: Ludescher, Hans
(86) Internationale Anmeldenummer: EP9705570
(87) Internationale Veröffentlichungsnummer: WO9819071

(56) Entgegenhaltungen:
- WO-A-97/12152
- DE-U- 8 433 318
- DE-U- 29 502 068
- FR-A- 2 606 065

## Beschreibung

Die Erfindung betrifft eine Schraube zur Befestigung von Metall- und/oder Kunststoffprofilen oder -platten auf einem Unterbau, bestehend aus einem Schaft mit einem Gewindeabschnitt und einem Angriffsabschnitt zum Ansetzen eines Eindrehgerätes, entsprechend dem ersten Teil des Anspruchs 1 (DE 295 02 068 4).

Gerade bei der Befestigung von Profilen oder Platten auf einem Unterbau ergeben sich dahingehend Probleme, als diese in einem fest an den Unterbau angepreßten Zustand befestigt werden müssen. Wenn relativ steife Profile oder Platten unter Umständen zusätzlich noch verzogen sind bzw. eine Längsverwindung aufweisen, verstärken sich diese negativen Wirkungen. Diesfalls kann in der Regel nicht mit einem Tiefenanschlag beim Eindrehgerät gearbeitet werden. Selbst beim Einsatz von Drehmomentkupplungen ergeben sich Probleme mit dem Abschaltzeitpunkt, da sich das Drehmoment nach der Auflage des Schraubenkopfes auf dem zu befestigenden Profil entsprechend erhöht und somit die Abschaltung des Eindrehgerätes bewirkt. Ein Abschalten der weiteren Eindrehbewegung erfolgt dann auch unabhängig davon, ob nun das zu befestigende Metall- und/oder Kunststoffprofil oder die -platte auf dem Unterbau aufliegt oder nicht.

Die vorliegende Erfindung hat sich daher zur Aufgabe gestellt, eine Schraube der eingangs genannten Art zu schaffen, bei deren Einsatz das zu befestigende Profil oder die zu befestigende Platte im endgültig gesetzten Zustand satt auf dem Unterbau aufliegt und eine drehmomentabhängige Abschaltung des Eindrehgerätes ermöglicht wird.

Erfindungsgemäß gelingt dies durch die Merkmale des Anspruchs 1, wobei unter Anderem sich der an den Angriffsabschnitt anschließende Abschnitt des Schaftes in Richtung zum Angriffsabschnitt hin konisch, stufenartig konisch oder im Querschnitt gesehen einer Kurve folgend erweitert, und daß der Durchmesser des angriffabschnittnahen Endes des sich erweiternden Abschnittes des Schaftes größer ist als der Durchmesser des die Schraube aufnehmenden Bohrloches in dem zu befestigenden Profil und somit auch größer als der Kerndurchmesser des Gewindeabschnittes der Schraube.

Durch diese erfindungsgemäßen Maßnahmen wird bereits beim Eindrehen der Schraube über eine oder mehrere Umdrehungen bewirkt, daß das zu befestigende Metall- und/oder Kunststoffprofil in Richtung zum Unterbau hin vorgespannt und somit gegen den Unterbau hin gedrückt wird. Der sich erweiternde Abschnitt des Schaftes bewirkt durch entsprechende Reibung im Bohrloch und durch die sich erweiternde Ausführung in Einschraubrichtung eine Krafteinwirkung auf das zu befestigende Profil.

Dabei ist es einfach, eine entsprechende Drehmomentkupplung so einzustellen, daß sie erst bei einem entsprechend großen Drehmoment ausgelöst wird. Zu diesem Zeitpunkt ist das zu befestigende Profil durch die Wirkung des sich erweiternden Abschnittes aber bereits satt an den Unterbau angepreßt, so daß es nur noch darum geht, das Eindrehgerät bei Erreichen des entsprechenden Drehmomentes abzuschalten. Das Drehmoment wird durch die starke Reibung des sich erweiternden Abschnittes gegenüber der Wandung des Bohrloches erreicht. Somit ist eine schnelle, drehmomentabhängige Abschaltung möglich, bzw. ein weiteres Eindrehen wird sicher verhindert.

Durch die Einwirkung des sich erweiternden Abschnittes auf die Bohrlochwandung wird zudem noch eine außerordentlich gute Rückdrehsicherung hervorgerufen. Die Oberfläche des sich erweiternden Abschnittes befindet sich mit der Bohrlochwandung praktisch in einem Paßsitz, wobei außerdem gerade bei entsprechend verzogenen bzw. verwundenen Profilen die Profile das Bestreben haben, in ihre Ausgangslage zurückzukehren. Dadurch ist immer eine zusätzliche federnde Belastung auf die Schraube vorhanden, welche die Rückdrehsicherung speziell im Hinblick auf die Einwirkung des sich erweiternden Abschnittes verstärkt.

Es ist an sich klar, daß der Beginn des sich erweiternden Abschnittes vom Schaft bzw. von einem gewindefreien Abschnitt des Schaftes ausgehen muß, weil ja dieser sich erweiternde Abschnitt in das Bohrloch in dem zu befestigenden Profil dem Schaft folgend in einfacher Weise eingeführt werden soll. Daran anschließend ist es aber erforderlich, daß der sich erweiternde Abschnitt möglichst rasch und wirkungsvoll mit der Wandung des Bohrloches in Eingriff kommt, um dadurch das axiale Vorspannen optimal bewerkstelligen zu können. Es wird also auf einem doch relativ kurzen Bereich des Eindrehens der Schraube das Anzugsmoment und somit die axiale Vorspannung auf das zu befestigende Profil ausgeübt, bevor es zu einer endgültigen Beendigung des Eindrehvorganges der Schraube kommt.

Durch den sich erweiternden Abschnitt wird auch bewirkt, daß optimale Befestigungen an einem Unterbau auch dann möglich sind, wenn derselbe gegebenenfalls aus einem dünnen Blech, aus anderen dünnen Materialien oder aus einem Material geringer Festigkeit, z.B. Gasbeton oder aber auch Schaumstoff, gebildet ist. Da der sich erweiternde Abschnitt praktisch den Auslöser für eine entsprechende Erhöhung des Drehmomentes darstellt, kann es nicht zu einem Überdrehen des Gewindes im Unterbau kommen.

Erfindungsgemäß wird weiter vorgeschlagen, daß der sich erweiternde Abschnitt des Schaftes bis unmittelbar zum Angriffsabschnitt bzw. zur Unterseite eines als Schraubenkopf ausgebildeten Angriffsabschnittes geführt ist. Damit ist gewährleistet, daß das Bohrloch bis zum endgültigen Setzen der Schraube ständig erweitert wird. Es ergibt sich dadurch auch ein sich ständig erhöhendes Drehmoment, welches von dem Eindrehgerät mit einer einstellbaren Abschaltreaktion erfaßt werden kann oder aber auf andere Weise ein weiteres Eindrehen der Schraube verhindert.

Dabei ist auch besonders zu beachten, daß die Abschaltung durch Drehmoment ganz exakt erfolgen muß, da bei einem zu späten Abschalten unter Umständen eine Beschädigung des Gewindeeingriffes im Unterbau erfolgen kann, so daß die Befestigung an sich wieder unwirksam ist.

Weiter ist es vorteilhaft, wenn der Durchmesser des angriffabschnittnahen Endes des sich erweiternden Abschnittes des Schaftes größer ist als der Außendurchmesser des Gewindeabschnittes auf dem Schaft. Ob nun ein vorgebohrtes Bohrloch in dem zu befestigenden Profil oder der Platte vorhanden ist oder aber eine Gewindebohrung, in welche die Schraube eingedreht wird, ist für die optimale Wirkung der vorliegenden Erfindung ohne Bedeutung. Durch den sich erweiternden Abschnitt wird immer ein entsprechend axiales Vorspannen in dem mit einem Gewinde versehenen Bohrloch des zu befestigenden Profils oder aber in einem gegenüber dem Gewindeaußendurchmesser größeren Bohrloch bewirkt. Bei Vorhandensein von Gewindegängen werden diese durch den sich erweiternden Abschnitt wieder zugedrückt bzw. flachgepreßt, wobei dadurch die Reibung des sich erweiternden Abschnittes gegenüber der Bohrlochwandung zumindest in den ersten paar Umdrehungen noch geringer ist als wenn eine glatte Bohrungswandung vorhanden wäre. Es ist also auch dann ein entsprechendes Zusammenziehen der zu befestigenden Profile bzw. Platten mit dem Unterbau gewährleistet, bevor es zu einem Abschalten des Eindrehgerätes bzw. zu einer Unterbrechung des weiteren Eindrehens der Schraube kommt.

Eine vorteilhafte Ausführung ergibt sich dann, wenn der Angriffsabschnitt aus zwei in axialer Richtung aufeinander folgenden Bereichen mit verschiedenen Ausbildungen für einen Werkzeugangriff gebildet ist. Daher ist auch je nach Bedarf ein Anziehen mit einer größeren bzw. einer kleineren Schlüsselweite und somit mit einer größeren oder kleineren Drehmomentübertragung möglich.

In diesem Zusammenhang ergibt sich dann erfindungsgemäß eine Ausgestaltung, wenn ein Bereich des Angriffsabschnittes zum Angriff des Eindrehgerätes und der weitere Bereich zum Ansetzen eines Werkzeuges zum eventuellen Rückdrehen der Schraube ausgebildet ist, wobei zwischen den beiden Bereichen des Angriffsabschnittes eine als Überdrehsicherung wirkende Sollbruchstelle ausgebildet ist. Dadurch ist die Möglichkeit geschaffen worden, daß mit dem einen Bereich des Angriffsabschnittes das Eindrehen der Schraube durchgeführt wird, wobei nach entsprechendem Zusammenziehen der beiden miteinander zu verbindenden Teile und durch die entsprechende Erhöhung des Drehmomentes beim Eingriff des sich erweiternden Abschnittes des Schaftes das Drehmoment so stark erhöht wird, daß dieser erste Bereich des Angriffsabschnittes abbricht. Es wird damit ein weiteres Eindrehen der Schraube plötzlich verhindert, so daß ein Überdrehen in dem Unterbau, insbesondere wenn er eine geringe Dicke und/oder eine geringe Festigkeit aufweist, verhindert wird. Trotzdem ist aber bei einem eventuell notwendigen Lösen der Schraubverbindung ein zusätzlicher Bereich des Angriffsabschnittes vorhanden, an welchem ein anderes Werkzeug angesetzt werden kann.

Eine vorteilhafte Ausgestaltung liegt darin, daß das dem Angriffsabschnitt abgewandte Ende des Schaftes als Bohrteil ausgeführt ist. Eine solche Ausführung ist insbesondere dann von Vorteil, wenn die beiden miteinander zu verbindenden Bauteile keine große Dicke aufweisen bzw. wenn in dem am Unterbau zu befestigenden Bauteil bereits ein entsprechendes Bohrloch vorhanden ist. Diesfalls ist von der Schraube selbst nur noch das Bohrloch in dem Unterbau herzustellen.

Gerade dann, wenn zwei Bauteile geringer Dicke miteinander verbunden werden sollen, ist es auch möglich, daß das dem Angriffsabschnitt abgewandte Ende des Schaftes als das Bohrloch selbstformende Eindringspitze ausgeführt ist. Eine solche konstruktive Gestaltung ist insbesondere dann zweckmäßig, wenn beispielsweise Bauteile aus Aluminium oder aus Kunststoff miteinander verbunden werden sollen.

Wenn es auf ein relativ rasches Setzen der Schraube ankommt, ist es vorteilhaft, daß der Gewindebereich des Schaftes zweigängig ausgeführt ist. Auch bei einem relativ schnellen axialen Vorschub der Schraube ist durch die Anordnung des sich erweiternden Abschnittes und gerade im Zusammenhang mit der Sollbruchstelle im Bereich des Angriffsabschnittes eine optimale Lösung geschaffen worden.

Zur Vermeidung eines bereits beim Herstellen des Gewindes im Bohrloch zu stark erhöhten Drehmomentes wird vorgeschlagen, daß der Gewindebereich des Schaftes mit einem selbstgewindeformenden Gewinde ausgebildet ist. Mittels einer solchen Ausgestaltung wird ein Gewinde mit relativ niedrigem Drehmoment hergestellt, so daß die Gefahr eines zu frühen Abschaltens bzw. eines zu frühen Auslösens der Sollbruchstelle verhindert wird. In diesem Zusammenhang ist es besonders zweckmäßig, wenn der Gewindebereich des Schaftes nach Art eines Gleichdicks, z.B. trilobular, ausgeführt ist. Es hat sich gezeigt, daß eine solche Ausbildung eines Gewindes gerade beim Einsatz in einem Unterbau geringer Dicke und/oder geringer Festigkeit vorteilhaft ist.

Je nach spezieller Befestigung von Metall- und/oder Kunststoffprofilen oder -platten auf einem Unterbau und je nach Material des Unterbaus kann das für eine Abschaltung des Eindrehgerätes bzw. für ein Auslösen der Sollbruchstelle vorgegebene Drehmoment beeinflußt werden. So wäre es denkbar, daß der sich erweiternde Abschnitt trompetenartig ausgeführt ist. Möglich wäre es aber auch, daß der sich erweiternde Abschnitt kelchartig ausgeführt ist.

Die einfachste Ausgestaltung in diesem Zusammenhang ergibt sich dann, wenn der sich erweiternde Abschnitt kegelstumpfartig ausgeführt ist. Diesfalls kann die Eindringtiefe dieses Abschnittes durch die Wahl des Kegelwinkels vorherbestimmt werden, und außerdem ergeben sich je nach Kegelwinkel kleinere oder größere gegenseitige Reibungsflächen zwischen dem Bohrloch bzw. dem Gewindeloch und der Oberfläche des kegelstumpfartigen Abschnittes.

Ein weiterer Vorteil der Erfindung liegt darin, daß der Angriffsabschnitt für ein Eindrehgerät direkt als Innenangriff in dem sich erweiternden Abschnitt des Schaftes ausgebildet ist. Es wäre also auch denkbar, den Angriffsabschnitt nicht in Form eines sonst üblichen Schraubenkopfes vorzusehen, sondern die Schraube eben mit diesem sich erweiternden Abschnitt enden zu lassen.

Eine weitere Möglichkeit zur Beeinflussung der Reibung zwischen dem sich erweiternden Abschnitt und der mit diesem zusammenwirkenden Oberfläche des Bohrloches ist dann möglich, wenn der sich erweiternde Abschnitt an seiner Oberfläche mit Erhebungen und/oder Vertiefungen, mit Rippen, Rillen, Rändelungen oder dergleichen versehen ist. Dadurch kann die Reibung wesentlich erhöht bzw. verändert werden, ohne daß der Zusammenzugeffekt zwischen dem zu befestigenden Profil oder der Platte und dem Unterbau verringert wird. Diese zusätzliche Ausbildung der Oberfläche des sich erweiternden Abschnittes bringt auch noch eine zusätzliche Verbesserung im Hinblick auf eine Rückdrehsicherung, insbesondere bei Befestigungsstellen, die Vibrationen oder ständigen Lastwechseln ausgesetzt sind.

Weitere erfindungsgemäße Merkmale und besondere Vorteile werden in der nachstehenden Beschreibung anhand der Zeichnungen noch näher erläutert. Es zeigen:
- Fig. 1: eine Ansicht einer Ausführung der erfindungsgemäßen Schraube;
- Fig. 2: ein Einsatzbeispiel für solche Schrauben, teilweise geschnitten dargestellt;
- Fig. 3: eine vergrößerte Darstellung des in Fig. 2 mit X bezeichneten Ausschnittes;
- Fig. 4: eine Schrägsicht eines Anwendungsfalles für die Befestigung von Profilen gemäß Fig. 2;
- Fig. 5: eine weitere Ausführungsform der Schraube und
- Fig. 6: einen Schnitt nach der Linie VI-VI in Fig. 5;
- Fig. 7 bis Fig. 11: weitere Ausführungsvarianten der erfindungsgemäßen Schraube;
- Fig. 12 bis Fig. 14: zwei Anwendungsvarianten für eine Schraube, welche mit tellerartigen Zusatzteilen zusammenwirkt.

Die erfindungsgemäße Schraube 1 besteht aus einem Schaft 2 und einem z.B. als Schraubenkopf ausgebildeten Angriffsabschnitt 3. Der Schaft 2 weist an seinem einen Ende einen Bohrabschnitt 4 auf und ist ferner mit einem Gewindeabschnitt 5 versehen. Der an den Angriffsabschnitt 3 anschließende Abschnitt 6 des Schaftes 2 ist in Richtung zum Angriffsabschnitt 3 hin konisch erweitert ausgeführt.

Nachfolgend wird lediglich von einem sich konisch erweiternden Abschnitt 6 gesprochen, wobei die Ausgestaltung dieses Abschnittes 6 durchaus auf verschiedene Art und Weise erfolgen kann. Neben der hier aufgezeigten konischen Ausgestaltung wäre es auch möglich, eine stufenartig konische Ausführung oder aber eine Erweiterung, welche im Querschnitt gesehen einer Kurve folgt, vorzusehen. Auf diese Ausführungen wird noch anhand von Zeichnungsfiguren näher eingegangen.

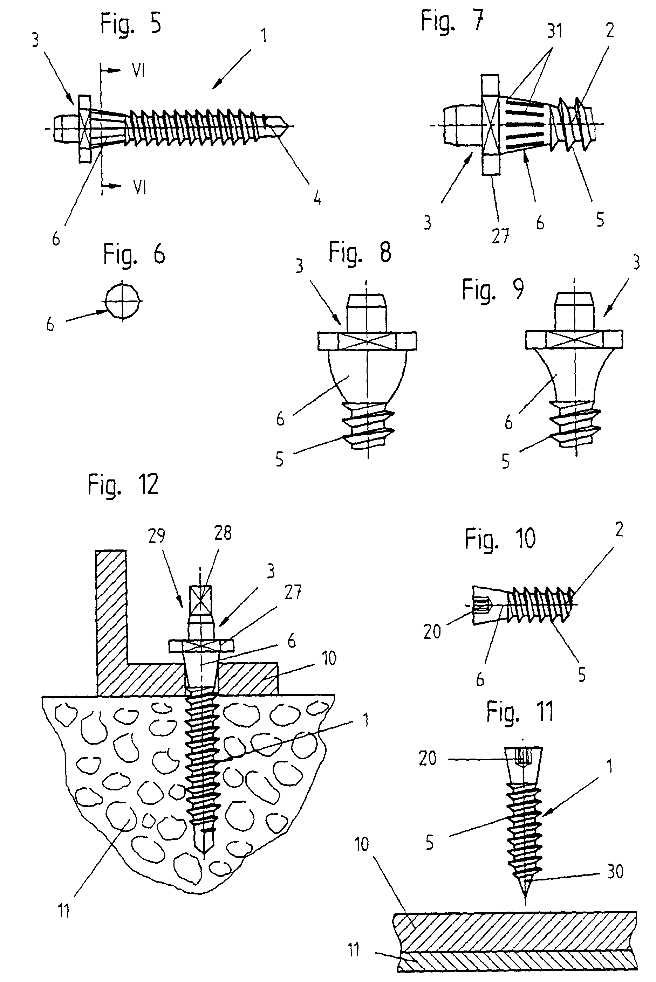

Der konische Abschnitt 6 des Schaftes 2 ist bis unmittelbar zur Unterseite 7 des Angriffsabschnittes 3 geführt. Der Durchmesser DK des schraubenkopfnahen Endes des konischen Abschnittes 6 ist größer ausgeführt als der Durchmesser D2 des die Schraube 1 aufnehmenden Bohrloches 14 in dem zu befestigenden Profil 10. Demnach ist der Durchmesser DK natürlich auch größer als der Bohrdurchmesser DB des Bohrabschnittes 4. Um eine entsprechende optimale Wirkung zu erreichen, ist der Durchmesser DK des schraubenkopfnahen Endes des konischen Abschnittes 6 größer ausgeführt als der Außendurchmesser DG des Gewindeabschnittes 5 auf dem Schaft 2. Die Schraube 1 dient zur Befestigung von Profilen 10 und gegebenenfalls Zwischenlagen 10' auf einem Unterbau 11, wie dies z.B. der Fig. 3 entnommen werden kann.

Zur näheren Erläuterung des aufgezeigten speziellen Befestigungsfalles wird auch auf Fig. 4 verwiesen. Auf einen Träger 21 werden Stahltrapezbleche 22 verlegt und mit diesem fest verbunden. Nach dem Aufbringen einer Dampfsperre 23 werden die Profile 10 gegebenenfalls unter Einschaltung von Zwischenlagen 10' in entsprechenden Abständen an dem Stahltrapezblech 22 befestigt. Diese Stahltrapezbleche weisen eine geringe Dicke auf, so daß es gerade bei einem solchen Befestigungsfall nicht nur sehr wesentlich auf das feste Anpressen und die feste Halterung des Profils 10 auf dem Unterbau ankommt, sondern auch darauf, daß die Schraube beim Setzen nicht überdreht wird, d.h. das Gewinde fest in dem sehr dünnen Blech des Stahltrapezbleches 22 verankert bleibt. Nach der Montage der Profile 10 wird die Wärmedämmung 24 aufgebracht und darauf abschließend das Stehfalzdach aus Metall oder Kunststoff. Die Verbindung der Stehfalzplatten 25 mit dem vom Stahltrapezblech 22 gebildeten Unterbau erfolgt über die Profile 10, so daß diese gerade bei durch Windeinwirkung sich ergebenden Sogkräften einer besonderen Belastung ausgesetzt sind.

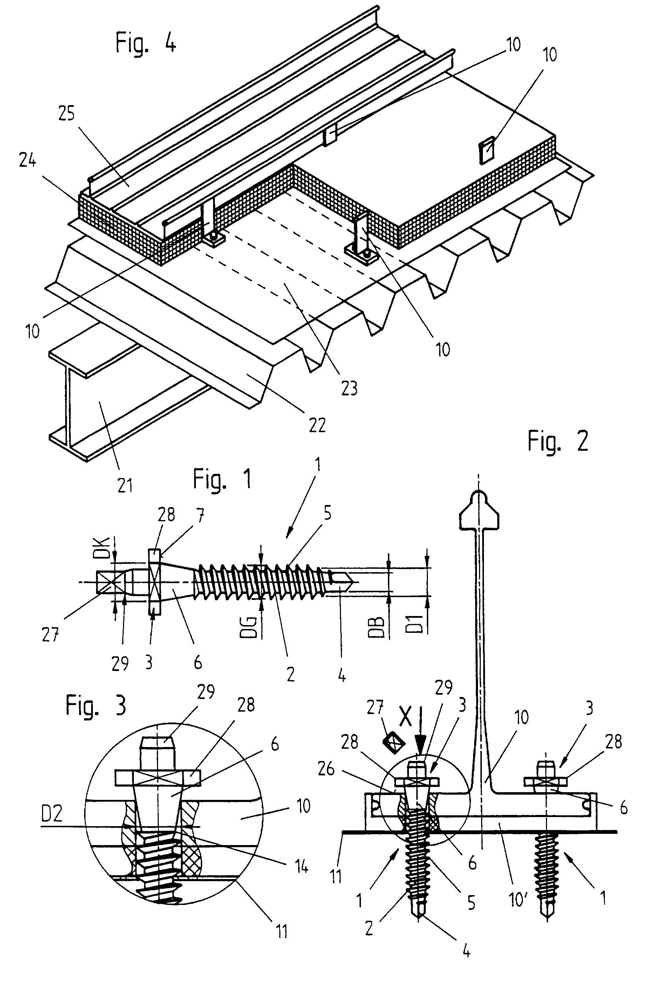

Bei einer solchen Befestigungsart ist es von Bedeutung, daß es nicht auf eine exakte Setztiefe der Schraube 1 ankommt, was den Fig. 2 und 3 entnommen werden kann. Dort ist das weitere Eindrehen der Schraube 1 unterbrochen worden, bevor die Unterseite 7 des Angriffsabschnittes 3 an der Oberseite 26 des Profils 10 zur Anlage kommt. Gerade bei einer solchen Anwendung ist diese Konstruktion vorteilhaft, weil ja anschließend die Wärmedämmung 24 aufgebracht wird, so daß sich bezüglich der über die Oberseite 26 des Profils 10 vorstehenden Teile der Schraube 1 keinerlei Probleme ergeben. Bei der Ausführung der Schraube 1 nach den Fig. 1, 2 und 3 ist der sich erweiternde Abschnitt 6 des Schaftes 2 bis unmittelbar zum Angriffsabschnitt 3 und somit zur Unterseite 7 des als Schraubenkopf ausgebildeten Angriffsabschnittes 3 geführt. Es wäre auch denkbar, daß der konische Abschnitt 6 nicht unmittelbar bis zur Unterseite 7 des als Schraubenkopf ausgebildeten Angriffsabschnittes 3 geführt ist, sondern daß an diesen konischen Abschnitt 6 beispielsweise ein kurzer zylindrischer Abschnitt anschließt, welcher dann in die Unterseite 7 des als Schraubenkopf ausgebildeten Angriffsabschnittes 3 übergeht.

Eine besondere Ausgestaltung des Angriffsabschnittes 3 ist ebenfalls den Zeichnungsfiguren zu entnehmen. Der Angriffsabschnitt 3 wird aus zwei in axialer Richtung aufeinander folgenden Bereichen 27 und 28 gebildet, welche mit verschiedenen Ausbildungen für einen Werkzeugangriff ausgeführt sind. Dabei ist der Bereich 27 des Angriffsabschnittes 3 zum Angriff des Eindrehgerätes ausgebildet. Der weitere Bereich 28, welcher beim gezeigten Ausführungsbeispiel einen größeren Außenumfang aufweist als der Bereich 27, dient zum Ansetzen eines Werkzeuges zum eventuellen Rückdrehen der Schraube 1, falls die Verbindung einmal gelöst werden müßte. Zwischen den beiden Bereichen 27 und 28 ist eine Sollbruchstelle 29 ausgebildet. Zumindest ist hier eine entsprechende Kerbwirkung beim Übergang von einem dünneren auf ein dickeres Material vorhanden, um dadurch eine Überdrehsicherung zu bewerkstelligen. Wenn der konische Abschnitt 6 an der Wandung des Bohrloches 14 zur Anlage kommt und wenn durch Gegeneinanderpressen der zu verbindenden Bauteile und somit durch Anpressen des konischen Abschnittes 6 ein entsprechend hohes Drehmoment erreicht wird, bricht der Bereich 27 des Angriffsabschnittes 3 ab, so daß das weitere Eindrehen der Schraube 1 plötzlich verhindert wird. Somit kann es nicht zu einem Überdrehen des Gewindes in dem Unterbau 11, welcher in der Regel aus Material geringer Dicke bzw. geringer Festigkeit besteht, kommen.

Die konstruktive Ausgestaltung der beiden Bereiche 27 und 28 bzw. der dazwischenliegenden Sollbruchstelle 29 kann natürlich auf verschiedene Art und Weise erfolgen. Es wäre durchaus denkbar, daß der Bereich 28 des Angriffsabschnittes zum Eindrehen der Schraube herangezogen und von dem anschließenden Abschnitt 6 über eine Sollbruchstelle abgetrennt wird. In einem solchen Falle wäre es auch denkbar, anstelle des vorstehenden Bereiches 27 einen entsprechenden Bereich als Innenangriff vorzusehen, welcher in den konischen Abschnitt 6 hineinragt. Damit wäre für das Eindrehen ein Außenangriff und für das Rückdrehen ein Innenangriff vorhanden. Zudem wäre es dabei denkbar, daß der oberste Bereich des konischen Abschnittes 6 mit einem entsprechenden Schlüsselangriff versehen ist, also eine Art Bereich 28 hätte, der jedoch nicht über den Umfang des konischen Abschnittes 6 hinausragt. Es sind in diesem Zusammenhang also eine Reihe von Konstruktionsvarianten möglich.

Bei verschiedenen Ausführungsvarianten gemäß den Zeichnungen ist das dem Angriffsabschnitt 3 abgewandte Ende des Schaftes 2 als Bohrteil 4 ausgeführt. Eine solche Ausgestaltung ist insbesondere dann sinnvoll, wenn relativ dünne Teile miteinander verbunden werden sollen oder wenn der zu befestigende Teil bereits vorgebohrt ist. Es kann dann mit einem relativ kurzen Bohrteil das Auslangen gefunden werden, da der Bohrvorgang vor dem Eingriff des Gewindebereiches beendet sein muß.

Gerade bei der Ausführung nach Fig. 11 ist ersichtlich, daß die Schraube 1 auch mit einer das Bohrloch selbstformenden Eindringspitze 30 ausgeführt werden kann. Diese Ausführung wird dann gewählt, wenn sowohl das Profil 10 als auch der Unterbau 11 eine relativ geringe Dicke aufweisen und vorteilhaft aus Aluminium oder Kunststoff bestehen.

Der Gewindebereich 5 des Schaftes 2 kann ein- oder mehrgängig ausgeführt werden. Bei einer Mehrgängigkeit ist vorteilhaft eine zweigängige Ausführung vorzusehen, wobei dies insbesondere dann in Frage kommt, wenn auf ein relativ schnelles Setzen Wert gelegt wird.

Vorteilhaft wird der Gewindebereich des Schaftes mit einem selbstgewindeformenden Gewinde ausgeführt. Es ist dadurch das Drehmoment nicht schon beim Einformen des Gewindes zu hoch, so daß das Auslösen der Sollbruchstelle oder eine drehmomentabhängige Abschaltung des Eindrehgerätes auf eine starke Erhöhung des Drehmomentes erst dann erfolgt, wenn eben der konische Abschnitt 6 zum Einsatz gelangt. Gerade bei der Ausbildung des Gewindes ist es vorteilhaft, einen Gewindebereich 5 nach Art eines Gleichdicks, z.B. eine trilobulare Ausführung, vorzusehen.

Wie schon ausgeführt, kann der sich erweiternde Abschnitt 6 auf verschiedene Art und Weise ausgeführt werden. Gemäß der Ausgestaltung nach Fig. 8 ist der sich erweiternde Abschnitt 6 kelchartig ausgeführt, so daß der Einsatzwinkel des Abschnittes 6 am Beginn relativ flach ist und dann immer steiler wird. Im Gegensatz dazu ist der sich erweiternde Abschnitt 6 bei der Ausbildung nach Fig. 9 trompetenartig ausgeführt, so daß sich der Einsatzwinkel des Abschnittes 6 bezogen auf die Mittelachse der Schraube 1 stetig vergrößert. Auf diese Weise kann noch zusätzlich eine Anpassung des aufzubringenden Drehmomentes erfolgen.

Die einfachste Ausführung des sich erweiternden Abschnittes 6 ist dann gegeben, wenn dieser kegelstumpfartig ausgeführt ist, was den meisten der gezeigten Ausführungsbeispiele entnommen werden kann.

Bei den Ausgestaltungen nach den Fig. 10, 11, 14 und 15 schließt sich an den konischen Abschnitt 6 kein weiterer besonderer Bereich des Angriffsabschnittes an. Dort ist lediglich ein Angriffsabschnitt in Form eines Innenangriffes 20 vorgesehen.

Die Fig. 5 und 6 zeigen eine Ausführung, bei welcher der sich erweiternde Abschnitt 6 nach Art eines vieleckigen Pyramidenstumpfes ausgebildet ist, wodurch sich Erhebungen und/oder Vertiefungen ergeben, welche zur Reibungserhöhung beim Eindrehen des Abschnittes 6 in das entsprechende Bohrloch dienen.

Die Ausführung nach Fig. 7 weist Rippen 31 bzw. Rillen auf, welche zur Reibungserhöhung, aber auch zur Verbesserung der Rückdrehsicherheit beitragen.

Im Rahmen der Erfindung ist es auch möglich, in anderer Art und Weise Erhebungen und/oder Vertiefungen, Rippen, Rillen oder zum Beispiel Rändelungen oder dergleichen vorzusehen. Weiter sind verschiedene Querschnittsformen im Bereich des Abschnittes 6 möglich. So könnte der Abschnitt im Querschnitt auch unrund, z.B. ellipsenförmig, oder in Form eines Gleichdicks, z.B. trilobular, ausgeführt sein.

Fig. 12 kann entnommen werden, daß die erfindungsgemäße Schraube auch für den Einsatz in Material geringer Festigkeit besonders geeignet ist. Beispielsweise sind Befestigungen in Porenbeton oder auch in Schaumstoffen durchaus auf diese Art und Weise möglich, ohne daß es trotz ausreichender Befestigung zu einem Überdrehen des Gewindebereiches im Untergrund 11 kommen kann.

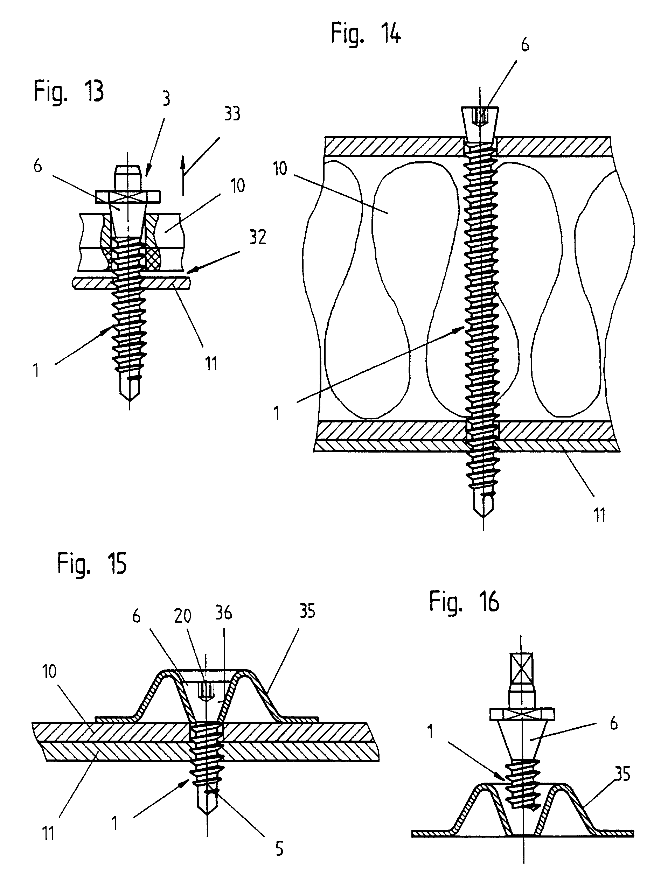

Der Ausgestaltung nach Fig. 13 ist zu entnehmen, daß es bei sehr starker Spannung oder bei einer entsprechenden Verwindung des Profils 10 gegebenenfalls zu einem Spalt 32 zwischen dem Profil 10 und dem Unterbau 11 kommen kann. Aber auch bei einer solchen, an sich nicht wünschenswerten Befestigungsstelle ist stets gewährleistet, daß trotzdem eine Schraubensicherung vorhanden ist. Bei entsprechender Belastung auf das Profil 10 in Pfeilrichtung 33, d.h. beispielsweise bei entsprechender Sogbelastung durch Windeinwirkung, wird das Profil 10 entsprechend nach oben gezogen und verkeilt sich somit noch mehr gegenüber dem Abschnitt 6. Es ist dadurch eine weitere Verbesserung der Rückdrehsicherung geschaffen.

Bei der Ausgestaltung nach Fig. 14 wird ein Profil 10 bzw. eine entsprechende Platte in Form einer beidseitig mit einem Blechabschluß versehenen Isolierung an einem Unterbau 11 befestigt. Der Gewindebereich 5 der Schraube 1 greift in den Unterbau 11 ein, wobei der sich erweiternde Abschnitt 6 anpressend und reibungserhöhend in der Bohrung an der Außenseite des Profils 10 eingreift. Es kann also auch eine solche Befestigung erfolgen, ohne daß es zu einem satten Aufliegen eines Schraubenkopfes bzw. der Unterseite eines Schraubenkopfes an der Oberfläche eines Profils 10 kommen muß.

Eine andere Ausführungsvariante kann den Fig. 15 und 16 entnommen werden. Bei einer solchen Ausgestaltung werden beispielsweise ein Profil 10 und ein Unterbau 11 miteinander verbunden, wobei auf das Profil 10 eine Art profilierte Scheibe 35 aufgesetzt wird, welche während des Eindrehvorganges der Schraube gegen Verdrehen gesichert gehalten ist. Durch das Eindrehen des Gewindebereiches 5 werden das Profil 10 und der Unterbau 11 gegeneinander gedrückt, sobald der Abschnitt 6 mit der trichterförmigen Innenfläche 36 der Scheibe 35 in Kontakt tritt. Es wird auch hier ein entsprechendes Zusammenziehen bewirkt, und außerdem ergibt sich die entsprechende Reibung durch den sich erweiternden Abschnitt 6, um dadurch eine Drehmomentkupplung beim Eintreibgerät auszulösen bzw. das Abbrechen eines Bereiches des Angriffsabschnittes 3 zu bewirken. Bei der Ausführung nach Fig. 15 ist lediglich ein Innenangriff 20 vorhanden, wogegen bei der Ausgestaltung nach Fig. 16 ein Angriffsabschnitt 3 ähnlich der Ausführung nach Fig. 1 ausgebildet ist.

Der Angriffsabschnitt 3 könnte für ganz spezielle Einsatzzwecke an seiner Unterseite 7 zusätzlich mit Erhebungen und/oder Vertiefungen versehen sein. Es könnten hier Rippen, Nuten, wellenförmige Rippen, Aufrauhungen, einzelne Spitzen, sägezahnförmige Rippen oder dergleichen ausgeführt werden. Eine solche Ausgestaltung wäre dann sinnvoll, wenn auch das zu befestigende Profil bzw. die zu befestigende Platte aus einem Material geringer Festigkeit besteht, so daß der sich erweiternde Abschnitt unter Umständen zur Gänze in das zu befestigende Profil bzw. die zu befestigende Platte hineingezogen wird. Das Eindrehgerät würde dann praktisch erst im letztmöglichen Zeitpunkt und bei einer plötzlich extrem erhöhenden Drehmomentbelastung abgeschaltet. Auch hier ist mit einer Drehmomentkupplung mit mechanischer, elektronischer oder hydraulischer Steuereinrichtung das Auslangen zu finden.

Durch die erfindungsgemäßen Maßnahmen ergibt sich immer in Achsrichtung der Schraube gesehen ein entsprechendes Anzugsmoment, so daß die zu befestigenden Profile bzw. eine zu befestigende Platte immer sicher und satt gegen den festen Unterbau 11 angepreßt werden bzw. wird. Außerdem wird gerade durch das gegenseitige Verspannen durch die Anlage des sich erweiternden Abschnittes 6 eine starke Drehmomenterhöhung bewirkt, welche zur rechten Zeit eine drehmomentabhängige Abschaltung des Eindrehgerätes bzw. ein Abbrechen des Befestigers im Bereich einer Sollbruchstelle auslöst. Auch dann, wenn sich keine axialen Kräfte durch das gegenseitige Zusammenziehen der zu befestigenden Bauteile ergeben, kann eine ausreichend große Drehmomenterhöhung durch entsprechenden Druck auf den Befestiger - ausgehend z.B. vom Eintreibgerät - erzielt werden. Durch die große Drehmomenterhöhung beim Eingreifen des sich erweiternden Abschnittes ist mit Sicherheit gewährleistet, daß ein Abschalten des Eindrehgerätes erfolgt, bevor eine eventuelle Beschädigung des Gewindes im Unterbau stattfindet, so daß eine erfindungsgemäße Schraube nicht nur in vorteilhafter Weise bei dünnen Blechen, sondern auch bei einem Unterbau aus dünnem Material oder aus Material geringer Festigkeit eingesetzt werden kann. Außerdem ist stets eine entsprechende Rückdrehsicherung gewährleistet.

## Patentansprüche

1. Schraube zur Befestigung von Metall- und/oder Kunststoffprofilen oder -platten auf einem Unterbau, bestehend aus einem Schaft mit einem Gewindeabschnitt und einem Angriffsabschnitt zum Ansetzen eines Eindrehgerätes, wobei sich der an den Angriffsabschnitt (3) anschließende Abschnitt (6) des Schaftes (2) in Richtung zum Angriffsabschnitt (3) hin konisch, stufenartig konisch oder im Querschnitt gesehen einer Kurve folgend erweitert, und daß der Durchmesser (DK) des angriffabschnittnahen Endes des sich erweiternden Abschnittes (6) des Schaftes (2) größer ist als der Außendurchmesser (DG) des Gewindeabschnittes (5) auf dem Schaft (2) und daher größer ist als der Durchmesser (D2) des die Schraube (1) aufnehmenden Bohrloches (14) in dem zu befestigenden Profil (10) und somit auch größer als der Kerndurchmesser (D1) des Gewindeabschnittes (5) der Schraube (1), **dadurch gekennzeichnet daß** im Bereich des Angriffsabschnittes (3) zum Angriff des Eindrehgerätes eine als Überdrehsicherung wirkende Soll-Bruchstelle (29) ausgebildet ist.

2. Schraube nach Anspruch 1, **dadurch gekennzeichnet, daß** der sich erweiternde Abschnitt (6) des Schaftes (2) bis unmittelbar zum Angriffsabschnitt (3) bzw. zur Unterseite (7) eines als Schraubenkopf ausgebildeten Angriffsabschnittes (3) geführt ist.

3. Schraube nach einem der Ansprüche 1 und 2, **dadurch gekennzeichnet, daß** der Angriffsabschnitt (3) aus zwei in axialer Richtung aufeinander folgenden Bereichen (27, 28) mit verschiedenen Ausbildungen für einen Werkzeugangriff gebildet ist.

4. Schraube nach einem der Ansprüche 1 bis 3, **dadurch gekennzeichnet, daß** ein Bereich (27) des Angriffsabschnittes (3) zum Angriff des Eindrehgerätes und der weitere Bereich (28) zum Ansetzen eines Werkzeuges zum eventuellen Rückdrehen der Schraube (1) ausgebildet ist.

5. Schraube nach einem der Ansprüche 1 bis 4, **dadurch gekennzeichnet, daß** die als Überdrehsicherung wirkende Soll-Bruchstelle (29) zwischen den beiden Bereichen (27, 28) des Angriffsabschnittes (3) ausgebildet ist.

6. Schraube nach Anspruch 1, **dadurch gekennzeichnet, daß** das dem Angriffsabschnitt (3) abgewandte Ende des Schaftes (2) als Bohrteil (4) ausgeführt ist.

7. Schraube nach Anspruch 1, **dadurch gekennzeichnet, daß** das dem Angriffsabschnitt (3) abgewandte Ende des Schaftes (2) als das Bohrloch selbstformende Eindringspitze (30) ausgeführt ist.

8. Schraube nach Anspruch 1, **dadurch gekennzeichnet, daß** der Gewindebereich (5) des Schaftes (2) zweigängig ausgeführt ist.

9. Schraube nach Anspruch 1, **dadurch gekennzeichnet, daß** der Gewindebereich (5) des Schaftes (2) mit einem selbstgewindeformenden Gewinde ausgebildet ist.

10. Schraube nach Anspruch 8 oder 9, **dadurch gekennzeichnet, daß** der Gewindebereich (5) des Schaftes nach Art eines Gleichdicks, z.B. trilobular, ausgeführt ist.

11. Schraube nach einem der Ansprüche 1 und 2, **dadurch gekennzeichnet, daß** der sich erweiternde Abschnitt (6) trompetenartig ausgeführt ist.

12. Schraube nach einem der Ansprüche 1 und 2, **dadurch gekennzeichnet, daß** der sich erweiternde Abschnitt (6) kelchartig ausgeführt ist.

13. Schraube nach einem der Ansprüche 1 und 2, **dadurch gekennzeichnet, daß** der sich erweiternde Abschnitt (6) kegelstumpfartig ausgeführt ist.

14. Schraube nach einem der Ansprüche 1 und 2, **dadurch gekennzeichnet, daß** der Angriffsabschnitt (3) für ein Eindrehgerät direkt als Innenangriff in dem sich erweiternden Abschnitt (6) des Schaftes (2) ausgebildet ist.

15. Schraube nach Anspruch 1 und einem der vorstehenden Ansprüche, **dadurch gekennzeichnet, daß** der sich erweiternde Abschnitt (6) an seiner Oberfläche mit Erhebungen und/oder Vertiefungen, mit Rippen (31), Rillen, Rändelungen oder dergleichen versehen ist.

## Claims

1. A screw for fastening metal and/or plastics profiles or panels to a substructure, comprising a shank having a threaded portion and an engagement portion for the application of a screwing-in device, wherein the portion (6) of the shank (2) adjacent the engagement portion (3) widens towards the engagement portion (3) conically, conically stepped or, viewed in cross-section, following a curve, and in that the diameter (DK) of the end near the engagement portion of the widened portion (6) of the shank (2) is larger than the outer diameter (DG) of the threaded portion (5) on the shank (2) and, therefore, is larger than the diameter (D2) of the borehole (14) accommodating the screw (1) in the profile (10) to be fastened and is thus also larger than the root diameter (D1) of the threaded portion (5) of the screw (1), **characterised in that** in the vicinity of the engagement portion (3) for engagement of the screwing-in device a predetermined breaking point (29) is formed acting as a means for preventing overtightening.

2. A screw according to Claim 1, **characterised in that** the widened portion (6) of the shank (2) extends right up to the engagement portion (3) or up to the underside (7) of an engagement portion (3) in the form of a screw head.

3. A screw according to either of Claims 1 and 2, **characterised in that** the engagement portion (3) is formed from two regions (27,28) following one another in axial direction, having different configurations for a tool engagement portion.

4. A screw according to any one of Claims 1 to 3, **characterised in that** one region (27) of the engagement portion (3) is designed for engagement of the screwing-in device and the further region (28) is designed for application of a tool for the possible unscrewing of the screw (1).

5. A screw according to any one of Claims 1 to 4, **characterised in that** the predetermined breaking point (29) acting as a means for preventing overtightening is formed between the two regions (27,28) of the engagement portion (3).

6. A screw according to Claim 1, **characterised in that** the end of the shank (2) remote from the engagement portion (3) is in the form of a drilling member (4).

7. A screw according to Claim 1, **characterised in that** the end of the shank (2) remote from the engagement portion (3) is in the form of a penetrating tip (30) which itself forms the borehole.

8. A screw according to Claim 1, **characterised in that** the threaded portion (5) of the shank (2) is of two-start design.

9. A screw according to Claim 1, **characterised in that** the threaded portion (5) of the shank (2) is formed with a self-tapping screw thread.

10. A screw according to Claim 8 or 9, **characterised in that** the threaded portion (5) of the shank is constant-diameter type, for example trilobular.

11. A screw according to either of Claims 1 and 2, **characterised in that** the widened portion (6) is formed trumpet-like.

12. A screw according to either of Claims 1 and 2, **characterised in that** the widened portion (6) is formed calyx shaped.

13. A screw according to either of Claims 1 and 2, **characterised in that** the widened portion (6) is of frustoconical form.

14. A screw according to either of Claims 1 and 2, **characterised in that** the engagement portion (3) for a screwing-in device is formed directly as an internal engagement portion in the widened portion (6) of the shank (2).

15. A screw according to Claim 1 and any one of the preceding Claims, **characterised in that** the widened portion (6) is provided on its surface with projections and/or recesses, with ribs (31), grooves, knurling or the like.

## Revendications

1. Vis pour fixer des profilés en matière plastique ou en métal sur une infrastructure, composée d'une tige comportant une partie filetée et une partie de saisie pour accueillir un appareil de vissage par rotation, la partie (6) qui fait suite à la partie de saisie (3) de la tige (2) s'élargissant en direction de cette partie de saisie (3), selon un cône, un cône étagé ou vue en section, en suivant une courbe, le diamètre DK de l'extrémité proche de la partie de saisie de la partie (6) de la tige (2) étant supérieur au diamètre externe (DG) de la partie filetée (5) de la tige (2) et donc supérieur au diamètre (D2) du trou foré (14) accueillant la vis (1) dans le profilé à fixer (10) et donc également plus grand que le diamètre (D1) du noyau de la partie filetée (5) de la vis (1),
**caractérisée en ce que**
dans la partie de saisie (3) destinée à accueillir l'appareil de vissage se trouve une zone de rupture imposée (29) agissant en tant que sécurité contre un survissage.

2. Vis selon la revendication 1,
**caractérisée en ce que**
la partie (6) de la tige (2) qui va en s'évasant s'étend jusqu'à proximité directe de la partie de saisie (3) ou jusqu'à la face inférieure (7) de la partie de saisie (3) réalisée sous la forme d'une tête de vis.

3. Vis selon la revendication 1 ou 2,
**caractérisée en ce que**
la partie de saisie (3) est constituée par deux zones (27, 28) se suivant en direction axiale et présentant deux configurations différentes pour accueillir un outil.

4. Vis selon l'une des revendications 1 à 3,
**caractérisée en ce qu'**
une zone (27) de la partie de saisie (3) est configurée pour accueillir l'appareil de vissage et l'autre zone (28) est configurée pour accueillir éventuellement un outil servant à faire tourner la vis (1) dans le sens de dévissage.

5. Vis selon l'une des revendications 1 à 4,
**caractérisée en ce que**
la zone de rupture imposée (29) agissant comme sécurité contre un survissage se trouve entre les deux zones (27, 28) de la partie de saisie (3).

6. Vis selon la revendication 1,
**caractérisée en ce que**
l'extrémité de la tige (2) éloignée de la partie de prise (3) est réalisée sous la forme d'une partie de forage (4).

7. Vis selon la revendication 1,
**caractérisée en ce que**
l'extrémité de la tige (2) éloignée de la partie de prise (3) est réalisée sous la forme d'une pointe de pénétration (30) assurant elle-même le perçage du trou foré.

8. Vis selon la revendication 1,
**caractérisé en ce que**
la zone filetée (5) de la tige (2) est à double filet.

9. Vis selon la revendication 1,
**caractérisée en ce que**
la zone filetée (5) de la tige (2) comporte un filetage autotaraudant.

10. Vis selon la revendication 8 ou 9,
**caractérisée en ce que**
la zone filetée (5) de la tige (2) est réalisée sous la forme d'une zone d'épaisseur uniforme, par exemple à trois lobes.

11. Vis selon la revendication 1 ou 2,
**caractérisée en ce que**
la zone (6) qui va en s'élargissant est en forme de trompette.

12. Vis selon la revendication 1 ou 2,
**caractérisée en ce que**
la zone (6) qui va en s'élargissant est en forme de calice.

13. Vis selon la revendication 1 ou 2,
**caractérisée en ce que**
la partie (6) qui va en s'élargissant a la forme d'un tronc de cône.

14. Vis selon la revendication 1 ou 2,
**caractérisée en ce que**
la partie de saisie (3) destinée à accueillir un appareil de vissage, est constituée par une empreinte réalisée directement dans la partie (6) qui va en s'élargissant, de la tige (2).

15. Vis selon la revendication 1 et une des revendications précédentes,
**caractérisée en ce que**
la partie (6) qui va en s'élargissant, porte à sa surface des saillies et/ou des creux, des nervures (31), des rainures, des moletages ou similaires.
